# EUROPEAN PATENT APPLICATION

(11) **EP 4 672 093 A1**
(43) Date of publication of application: **31.12.2025**
(21) Application number: 25184195.3
(22) Date of filing: 20.06.2025
(51) Int. Cl.: G06N 5/01, G06N 20/20

(54) **TRAINING PROGRAM OF MACHINE LEARNING MODEL, TRAINING METHOD OF MACHINE LEARNING MODEL, AND TRAINING APPARATUS OF MACHINE LEARNING MODEL**

(30) Priority: 26.06.2024 JP 2024102583
(71) Applicant: FUJITSU LIMITED, Kawasaki-shi, Kanagawa 211-8588 (JP)
(72) Inventor: Kanamori, Kentaro, Kawasaki-shi, Kanagawa, 211-8588 (JP); Takagi, Takuya, Kawasaki-shi, Kanagawa, 211-8588 (JP)
(74) Representative: Hoffmann Eitle

(57) **Abstract**

A training program of a machine learning model outputs a proposal for obtaining a desired result, the training program of a machine learning model causes a computer to execute a process including: acquiring training data including a plurality of attributes; acquiring constraint condition data of the attributes; calculating first information regarding prediction accuracy of the machine learning model based on the training data; calculating second information regarding feasibility of the proposal based on the training data and the constraint condition data; calculating an evaluation index based on the first information and the second information; and training the machine learning model based on the evaluation index.

## Description

### Technical Field

Embodiments discussed herein are related to a training program of a machine learning model, a training method of a machine learning model, and a training apparatus of a machine learning model.

### Background Art

A relationship between an explanatory variable and an objective variable is modeled using training data, and a machine learning model that outputs a result of the objective variable according to an input explanatory variable is trained. For example, in a machine learning model regarding examination of a loan, the relationship between the explanatory variable and the objective variable is modeled using a value of an attribute such as an age and a revenue of a user as the explanatory variable and information regarding credit as the objective variable.

Meanwhile, when the explanatory variable is input to the machine learning model, there may be cases where a desired result of the objective variable is not obtained. In order to deal with this case, there is a technique of presenting an improvement proposal for obtaining the desired result. For example, a case will be considered in which, when an explanatory variable is input to a machine learning model regarding loan examination, an undesired result that the loan examination is disapproved is output. In order for the loan examination to have the desired result of acceptance, for example, an improvement proposal (action) such as raising revenue is presented.

### Citation List

### Patent Literature

Patent Document 1: Japanese Laid-open Patent Publication No. 2023-77904
Patent Document 2: Japanese Laid-open Patent Publication No. 2023-113928

### Non Patent Literature

Non Patent Document 1: "Learning Models for actionable recourse", [Searched on June 23, 2024], Internet <URL: //openreview.net/pdf?id=JZK9uP4Fev>

However, in the related art, there is a case where improvement proposals for obtaining desired results are not realized. For example, in a case where an explanatory variable is input to a machine learning model regarding loan examination and an improvement proposal for obtaining a desired result is presented, there is a case where an unfeasible improvement proposal of making an age younger is presented. In the related art, there is a problem that it is not easy to achieve both the prediction accuracy of the machine learning model and the feasibility of the improvement proposal.

Accordingly, it is an object in one aspect of an embodiment of the present invention to provide a technology capable of presenting an improvement proposal in consideration of a possibility of realization while suppressing a decrease in prediction accuracy of a machine learning model.

### Solution to Problem

An aspect of a training program of a machine learning model outputs a proposal for obtaining a desired result, the training program of a machine learning model causes a computer to execute a process including: acquiring training data including a plurality of attributes; acquiring constraint condition data of the attributes; calculating first information regarding prediction accuracy of the machine learning model based on the training data; calculating second information regarding feasibility of the proposal based on the training data and the constraint condition data; calculating an evaluation index based on the first information and the second information; and training the machine learning model based on the evaluation index.

### Advantageous Effects of Invention

According to one aspect, it is possible to present an improvement proposal in consideration of a possibility of realization while suppressing a decrease in prediction accuracy of a machine learning model.

### Brief Description of Drawings

FIG. 1 is a functional block diagram illustrating a configuration of an information processing apparatus;
FIG. 2 is a diagram illustrating an example of training data;
FIG. 3 is a diagram illustrating an example of constraint condition data;
FIG. 4 is a diagram for explaining a distribution of training data;
FIG. 5 is diagrams for explaining division of distribution of training data;
FIG. 6 is diagrams for explaining a distribution of divided training data;
FIG. 7 is a diagram for explaining application of the present invention to a random forest;
FIG. 8 is a diagram for explaining application of the present invention to gradient boosting;
FIG. 9 is a diagram illustrating an example of target data;
FIG. 10 is a diagram for explaining a problem when target data is input to a machine learning model of the related art;
FIG. 11 is a diagram for explaining an effect when the target data is input to the machine learning model of the present embodiment;
FIG. 12 is a flowchart illustrating a flow of processing by the information processing apparatus;
FIG. 13 is a flowchart illustrating details of processing of training a machine learning model; and
FIG. 14 is an example of a hardware configuration of the information processing apparatus.

### Description of Embodiments

Preferred embodiments will be explained with reference to accompanying drawings. Note that this embodiment does not limit the disclosed technology. Then, embodiments can be appropriately combined within a range in which the processing contents do not contradict each other.

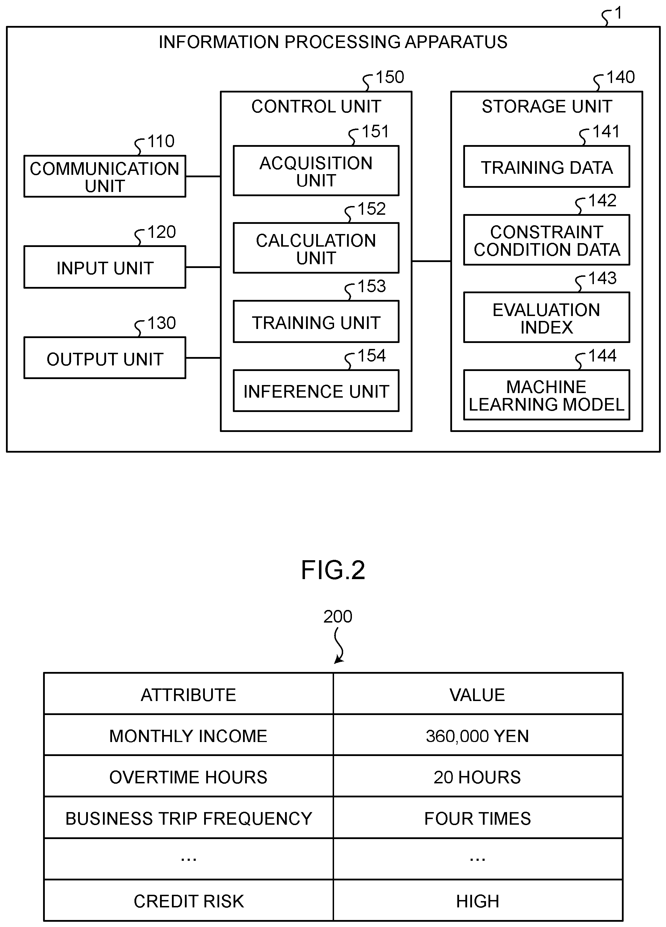

FIG. 1 is a functional block diagram illustrating a configuration of an information processing apparatus (machine learning model training apparatus) according to the present embodiment. As illustrated in FIG. 1, the information processing apparatus 1 includes a communication unit 110, an input unit 120, an output unit 130, a storage unit 140, and a control unit 150.

The communication unit 110 is a processing unit that executes data communication with an external device (not illustrated) via a network. The communication unit 110 is an example of a communication device. The information processing apparatus 1 may acquire training data and constraint condition data to be described later from the external device. Furthermore, the information processing apparatus 1 may acquire target data to be described later from the external device.

The input unit 120 is an input device for inputting various types of information to the information processing apparatus 1. A user may operate the input unit 120 to input the training data and constraint condition data to be described later. Furthermore, the user may operate the input unit 120 to input the target data to be described later. The output unit 130 is an output device that displays information output from the control unit 150.

The storage unit 140 is a functional unit that stores various types of information acquired, referred to, and the like in the information processing apparatus 1, including an operating system (OS) executed by the control unit 150. The storage unit 140 stores training data 141, constraint condition data 142, an evaluation index 143, and a machine learning model 144. The control unit 150 is a functional unit that performs overall control of the information processing apparatus 1. The control unit 150 includes an acquisition unit 151, a calculation unit 152, a training unit 153, and an inference unit 154.

The acquisition unit 151 acquires, from the communication unit 110 or the input unit 120, a plurality of training data (learning data) used for training (learning) the machine learning model and the constraint condition data.

FIG. 2 is a diagram illustrating an example of the training data. As illustrated in FIG. 2, in training data 200, an attribute and a value of the attribute are associated with each other. In the example of FIG. 2, "monthly income is 360,000 yen, overtime hours are 20 hours, and business trip frequency is four times" are set for the attribute and the value of the attribute as an explanatory variable. As the objective variable, "credit risk is high" is set for the attribute and the value of the attribute.

FIG. 2 illustrates training data indicating that a user with the monthly income of 360,000 yen, the overtime hours of 20 hours, and the business trip frequency of four times has a high credit risk regarding loan examination. The acquisition unit 151 acquires a plurality of training data regarding a plurality of users or a training data set including the plurality of training data. The storage unit 140 stores the plurality of acquired training data or the training data 141 regarding the training data set.

In FIG. 2, the monthly income, the overtime hours, the business trip frequency, and the like are exemplified as the attributes, but the attributes are not be limited thereto. For example, the attribute may be any conceivable, such as a purpose of the loan, an educational background, the number of outstanding loans, or the like. In addition, in FIG. 2, the value of 360,000 yen is exemplified as the value of the monthly income, but the value of the monthly income is not limited thereto. In addition, the value of the monthly income may be in a certain range or condition, such as 400,000 yen or more and 400,000 yen or more and less than 500,000 yen. The same applies to values of other attributes.

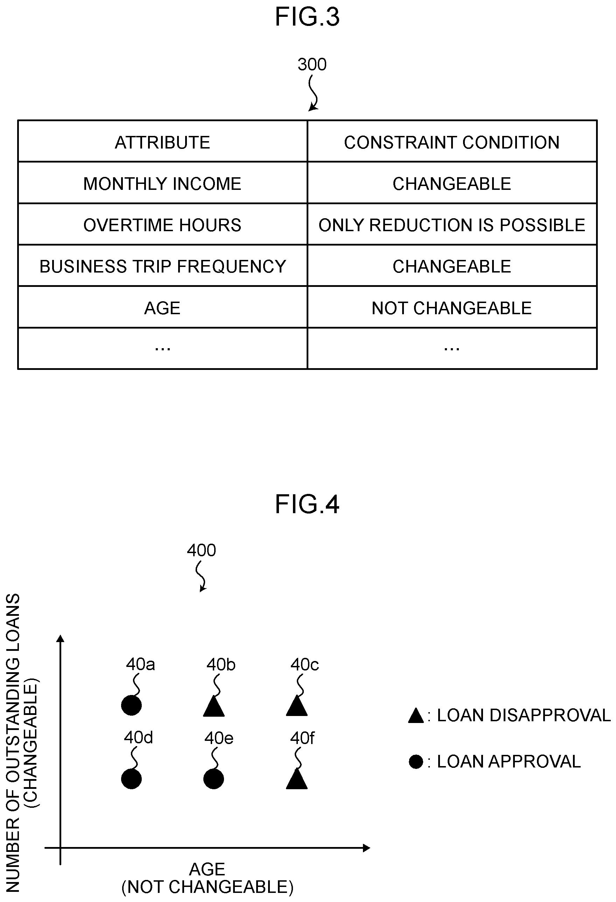

FIG. 3 is a diagram illustrating an example of the constraint condition data. As illustrated in FIG. 3, in constraint condition data 300, the attribute and the constraint condition of the attribute are associated with each other. In the example of FIG. 3, "the monthly income can be changed, the overtime hours can only be reduced, the business trip frequency can be changed, and the age is not changeable" are set for the attribute and the constraint condition of the attribute.

FIG. 3 illustrates that, regarding improvement proposal for obtaining a desired result in the loan examination, the monthly income can be changed, the overtime hours can only be reduced, the business trip frequency can be changed, and the age is not changeable. Note that the constraint conditions of the attributes can be changed as appropriate. The acquisition unit 151 acquires the constraint condition for each of the plurality of attributes. The storage unit 140 stores the constraint condition data 142 regarding the acquired constraint condition for each of the plurality of attributes.

In FIG. 3, as in FIG. 2, the monthly income, the overtime hours, the business trip frequency, and the like are exemplified as the attributes, but the attributes are not limited thereto. For example, the attribute may be any conceivable, such as a purpose of the loan, an educational background, the number of outstanding loans, or the like. In addition, FIG. 3 illustrates that the constraint condition of the monthly income can be changed, but the monthly income constraint condition is not limited thereto. In addition, the constraint condition of the monthly income may be a specific condition such as being unchangeable or being able to increase only up to 30,000 yen. The same applies to the constraint conditions of other attributes.

The description returns to FIG. 1. The calculation unit 152 calculates the evaluation index based on first information regarding the prediction accuracy of the machine learning model and second information regarding the feasibility of the improvement proposal. The calculation unit 152 may calculate the first information based on the training data. The calculation unit 152 may calculate the second information based on the training data and the constraint condition data. The storage unit 140 stores the evaluation index 143 regarding the calculated evaluation index. The storage unit 140 may store the first information and the second information.

The training unit 153 trains the machine learning model based on the training data and the constraint condition data. In the present embodiment, it is described that the machine learning model is a decision tree model, but the machine learning model is not limited thereto. The training unit 153 trains the machine learning model based on the calculated evaluation index.

The training unit 153 may recursively train the machine learning model. Calculation of the evaluation index and training of the machine learning model will be described in detail with reference to FIGS. 4 to 6. Note that the function of the calculation unit 152 may be included in the function of the training unit 153.

FIG. 4 is a diagram for explaining a distribution of the training data. A graph 400 of FIG. 4 is a distribution of a plurality of training data represented such that a vertical axis and a horizontal axis correspond to the attribute of the training data and the data marked with a triangle and the data marked with a circle correspond to the values of the attribute of the training data. In FIG. 4, for convenience of explanation, two-dimensional graphs of the vertical axis and the horizontal axis are illustrated for the two attributes, but the present invention is not limited thereto. For example, an N-dimensional graph with N axes may be used for N (N is a natural number of 3 or more) attributes. In addition, FIG. 4 illustrates six pieces of data, but is not limited thereto.

In FIG. 4, the vertical axis is an axis corresponding to the attribute of the number of outstanding loans, and the horizontal axis is an axis corresponding to the attribute of age. Here, the constraint condition of the number of outstanding loans can be changed, and the constraint condition of the age is not changeable. The data marked with the triangle is data of a label (objective variable) at which the loan is disapproved, and the data marked with the circle is data of a label at which the loan is approved.

In FIG. 4, the data 40a, the data 40d, and the data 40e are the data of the label at which the loan is approved, and the data 40b, the data 40c, and the data 40f are data of the label at which the loan is disapproved.

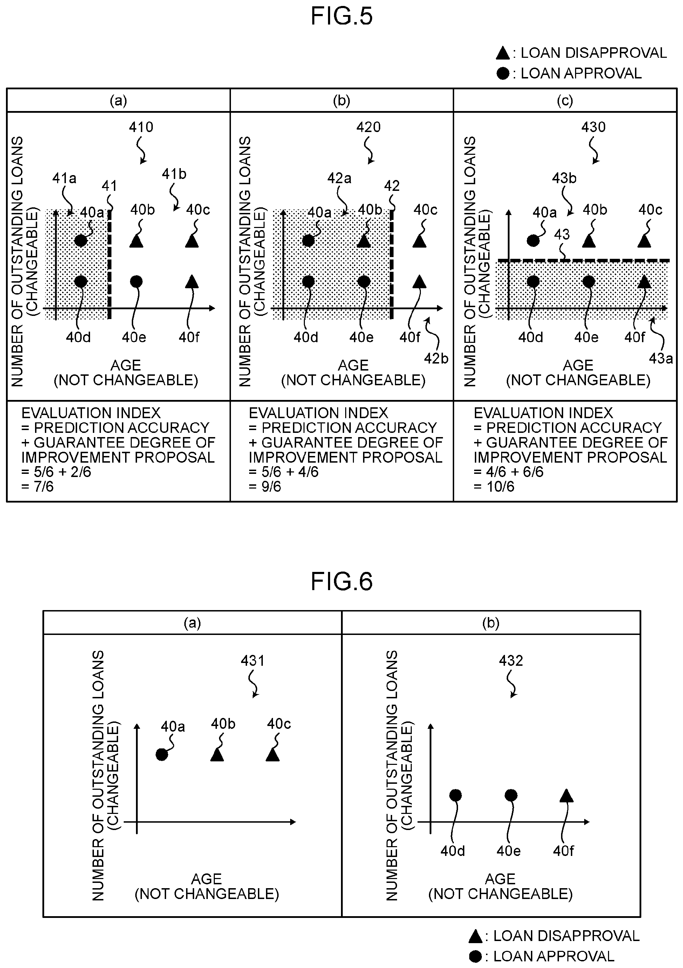

FIG. 5 is diagrams for explaining division of the distribution of the training data. The calculation unit 152 divides the training data into a plurality of regions including a first region and a second region in a division pattern of a plurality of division lines. The calculation unit 152 divides and predicts the label by the first region and the second region. FIG. 5 illustrates three first division patterns that divide the training data. FIG. 5(a) illustrates a graph 410 which is a first division pattern 1 of the graph 400. FIG. 5(b) illustrates a graph 420 which is a first division pattern 2 of the graph 400. FIG. 5(c) illustrates a graph 430 which is a first division pattern 3 of the graph 400.

A graph 410 of FIG. 5(a) is a diagram in which data 40a and data 40d, and data 40b and data 40e are divided by a division line 41 parallel to the vertical axis. The division line 41 performs the division to predict that the loan will be approved in a region 41a on the left side of the division line 41, and predict that the loan will be disapproved in a region 41b on the right side of the division line 41.

Here, the prediction accuracy by the division line 41 will be described. The prediction accuracy by the division line 41 is an example of the first information. The calculation unit 152 calculates the first information based on the number of pieces of training data that match the labels of the first region and the second region. As illustrated in FIG. 5(a), among data included in the region 41a in which the loan is predicted to be approved, the data of a label in which the loan is approved is two pieces of data, that is, the data 40a and data 40d. In addition, among the data included in the region 41b in which the loan is predicted to be disapproved, the data of the label in which the loan is disapproved is three pieces of data, that is, the data 40b, data 40c, and data 40f. That is, among a total of six pieces of data, five pieces of data are consistent with the contents that the loan will be predicted to be approved or disapproved. Therefore, in the example illustrated in FIG. 5(a), the calculation unit 152 calculates the prediction accuracy as 5/6.

Next, the guarantee degree of the improvement proposal by the division line 41 will be described. The guarantee degree of the improvement proposal by the division line 41 is an example of the second information. The calculation unit 152 calculates the second information based on the number of pieces of training data for which a change from the first region to the second region can be proposed. As illustrated in FIG. 5(a), the data included in the region 41a in which the loan is predicted to be approved is two pieces of data, that is, the data 40a and data 40d. Further, the data included in the region 41b in which the loan is predicted to be disapproved is four pieces of data, that is, the data 40b, data 40c, data 40e, and data 40f.

Here, a case of making an improvement proposal is considered. In a case where an improvement proposal is made in which the data of the disapproving label of the loan that is not the desired result is the approval of the loan that is the desired result, there is a need to consider whether the four pieces of data included in the region 41b can be moved to the region 41a. However, the age on the horizontal axis of the graph 410 is not changeable due to the constraint condition. Therefore, it is impossible to move the four pieces of data included in the region 41b to the region 41a.

Therefore, in the example illustrated in FIG. 5(a), the calculation unit 152 calculates the guarantee degree of the improvement proposal to be 2/6 including only two pieces of data included in the region 41a among a total of six pieces of data. Note that the calculation unit 152 may calculate the guarantee degree of the improvement proposal as 0/6 without including the two pieces of data included in the region 41a.

Next, the evaluation index by the division line 41 will be described. The calculation unit 152 calculates the evaluation index by adding the prediction accuracy and the guarantee degree of the improvement proposal. In the example illustrated in FIG. 5(a), the prediction accuracy of 5/6 and the guarantee degree of the improvement proposal of 2/6 are added to calculate the evaluation index as 7/6.

A graph 420 of FIG. 5(b) is a diagram in which the data 40b and data 40e, and the data 40c and data 40f are divided by a division line 42 parallel to the vertical axis. The division line 42 performs the division to predict that the loan will be approved in a region 42a on the left side of the division line 42, and predicts that the loan will be disapproved in a region 42b on the right side of the division line 42.

Here, the prediction accuracy by the division line 42 will be described. The prediction accuracy by the division line 42 is an example of the first information. The calculation unit 152 calculates the first information based on the number of pieces of training data that match the labels of the first region and the second region. As illustrated in FIG. 5(b), among the data included in the region 42a in which the loan is predicted to be approved, the data of the label in which the loan is approved is three pieces of data, that is, the data 40a, data 40d, and data 40e. In addition, among the data included in the region 42b in which the loan is predicted to be disapproved, the data of the label in which the loan is disapproved is two pieces of data, that is, the data 40c and data 40f. That is, among a total of six pieces of data, five pieces of data are consistent with the contents that the loan will be predicted to be approved or disapproved. Therefore, in the example illustrated in FIG. 5(b), the calculation unit 152 calculates the prediction accuracy as 5/6.

Next, the guarantee degree of the improvement proposal by the division line 42 will be described. The guarantee degree of the improvement proposal by the division line 42 is an example of the second information. The calculation unit 152 calculates the second information based on the number of pieces of training data for which a change from the first region to the second region can be proposed. As illustrated in FIG. 5(b), the data included in the region 42a in which the loan is predicted to be approved is four pieces of data, that is, the data 40a, data 40b, data 40d, and data 40e. In addition, the data included in the region 42b in which the loan is predicted to be disapproved is two pieces of data, that is, the data 40c and data 40f. Here, a case of making an improvement proposal is considered. In a case where an improvement proposal is made in which the data of the disapproving label of the loan that is not the desired result is the approval of the loan that is the desired result, there is a need to consider whether the two pieces of data included in the region 42b can be moved to the region 42a. However, the age on the horizontal axis of the graph 420 is not changeable due to the constraint condition. Therefore, it is impossible to change two pieces of data included in the region 42b to the region 42a.

Therefore, in the example illustrated in FIG. 5(b), the calculation unit 152 calculates the guarantee degree of the improvement proposal to be 4/6 including only four pieces of data included in the region 42a among a total of six pieces of data. Note that the calculation unit 152 may calculate the guarantee degree of the improvement proposal as 0/6 without including the four pieces of data included in the region 42a.

Next, the evaluation index by the division line 42 will be described. The calculation unit 152 predicts the evaluation index

The accuracy and the guarantee degree of the improvement proposal are added and calculated. In the example illustrated in FIG. 5(b), the prediction accuracy of 5/6 and the guarantee degree of the improvement proposal of 4/6 are added to calculate the evaluation index as 9/6.

A graph 430 of FIG. 5(c) is a diagram in which the data 40a, data 40b, and data 40c, and the data 40d, data 40e, and data 40f are divided by a division line 43 parallel to the horizontal axis. The division line 43 performs the division to predict that the loan will be approved in a region 43a below the division line 43, and predicts that the loan will be disapproved in a region 43b above the division line 43.

Here, the prediction accuracy by the division line 43 will be described. The prediction accuracy by the division line 43 is an example of the first information. The calculation unit 152 calculates the first information based on the number of pieces of training data that match the labels of the first region and the second region. As illustrated in FIG. 5(c), among data included in the region 43a in which the loan is predicted to be approved, the data of a label in which the loan is approved is two pieces of data, that is, the data 40d and data 40e. In addition, among the data included in the region 43b in which the loan is predicted to be disapproved, the data of the label in which the loan is disapproved is two pieces of data, that is, the data 40b and data 40c. That is, among a total of six pieces of data, four pieces of data are consistent with the contents that the loan will be predicted to be approved or disapproved. Therefore, in the example illustrated in FIG. 5(c), the calculation unit 152 calculates the prediction accuracy as 4/6.

Next, the guarantee degree of the improvement proposal by the division line 43 will be described. The guarantee degree of the improvement proposal by the division line 43 is an example of the second information. The calculation unit 152 calculates the second information based on the number of pieces of training data for which a change from the first region to the second region can be proposed. As illustrated in FIG. 5(c), the data included in the region 43a in which the loan is predicted to be approved is three pieces of data, that is, the data 40d, data 40e, and data 40f. In addition, the data included in the region 43b in which the loan is predicted to be disapproved is three pieces of data, that is, the data 40a, data 40b, and data 40c. Here, a case of making an improvement proposal is considered. In a case where an improvement proposal is made in which the data of the disapproving label of the loan that is not the desired result is the approval of the loan that is the desired result, there is a need to consider whether the three pieces of data included in the region 43b can be moved to the region 43a. The number of outstanding loans, which is the vertical axis of the graph 430, can be changed by the constraint condition. Therefore, the three pieces of data included in the region 43b can be moved to the region 43a.

Therefore, in the example illustrated in FIG. 5(c), the calculation unit 152 calculates the guarantee degree of the improvement proposal as 6/6 by including the three pieces of data included in the region 43a and the three data included in the region 43b among the total of six pieces of data. Note that the calculation unit 152 may calculate the guarantee degree of the improvement proposal as 3/6 without including the three pieces of data included in the region 43a.

Next, the evaluation index by the division line 43 will be described. The calculation unit 152 calculates the evaluation index by adding the prediction accuracy and the guarantee degree of the improvement proposal. In the example illustrated in FIG. 5(c), the prediction accuracy of 4/6 and the guarantee degree of the improvement proposal of 6/6 are added to calculate the evaluation index as 10/6.

Note that the division line 41, the division line 42, and the division line 43, which are the division lines of the present embodiment, have been described as being parallel to the horizontal axis or the vertical axis, but the present invention is not limited thereto. For example, the division line may be oblique to the horizontal axis and the vertical axis.

Furthermore, in FIG. 5, the division line 41, the division line 42, and the division line 43, which are division lines of the present embodiment, are represented by straight lines, but the present invention is not limited thereto. For example, the division line may be a curve, a polygonal line, or a line obtained by combining a straight line, a curve, and a polygonal line.

The prediction accuracy, the guarantee degree of the improvement proposal, and the evaluation index by the calculation unit 152 of the present embodiment are not limited to the above-described calculation method.

For example, the calculation unit 152 divides each of the prediction accuracy and the guarantee degree of the improvement proposal by the total number of data, but does not have to divide by the total number of pieces of data.

In addition, the calculation unit 152 may calculate by integrating a coefficient into the prediction accuracy and the guarantee degree of the improvement proposal and adding the prediction accuracy with the integrated coefficient and the guarantee degree of the improvement proposal. Furthermore, the calculation unit 152 may calculate the evaluation index by integrating the prediction accuracy and the guarantee degree of the improvement proposal. The balance between the prediction accuracy and the guarantee degree of the improvement proposal can be adjusted by a hyperparameter.

The present invention is not limited to this, and the calculation unit 152 may calculate the prediction accuracy, the guarantee degree of the improvement proposal, and the evaluation index by using any calculation method that can express the prediction accuracy, the guarantee degree of the improvement proposal, and the evaluation index.

The evaluation index 143 calculated by the calculation unit 152 is stored in the storage unit 140. Furthermore, the prediction accuracy or the guarantee degree of the improvement proposal calculated by the calculation unit 152 may be stored in the storage unit 140.

The training unit 153 selects a division line having the highest evaluation index among a plurality of division patterns of data, and divides the data with the selected division line. In the example illustrated in FIG. 5, the training unit 153 selects the division line 43 having the highest evaluation index from among the division line 41, the division line 42, and the division line 43, and divides the graph 400 with the selected division line 43. The training unit 153 selects a division line having the highest evaluation index based on the training data and the constraint condition data, and trains the machine learning model.

FIG. 6 is diagrams for explaining a distribution of divided training data. FIG. 6 illustrates a distribution of two training data divided by the division line 43 having the highest evaluation index calculated in FIG. 5. FIG. 6(a) illustrates a graph 431 including the data 40a, data 40b, and data 40c located above the division line 43 of the graph 430. FIG. 6(b) illustrates a graph 432 including the data 40d, data 40e, and data 40f located below the division line 43 of the graph 430.

The calculation unit 152 or the training unit 153 may perform the same processing as described above on the graph 400 illustrated in FIG. 4 also in the graph 431 illustrated in FIG. 6(a) and the graph 432 illustrated in FIG. 6(b). The calculation unit 152 performs the processing of dividing the distribution of the plurality of pieces of divided data into a plurality of regions including a third region and a fourth region in a plurality of second division patterns.

The calculation unit 152 calculates an evaluation index for each of the plurality of second division patterns. The training unit 153 generates a distribution of further divided data by dividing the distribution of the divided data by the second division pattern having the highest evaluation index.

The training unit 153 selects a division line having the highest evaluation index based on the training data and the constraint condition data, and recursively trains the machine learning model. Note that, in order to suppress over-training, the training unit 153 may perform training of the recursive decision tree model only a predetermined number of times and end the processing.

The training technique of the decision tree model of the present embodiment can be extended to the training technique of the ensemble model of the decision tree. Examples of a training technique of the ensemble model include random forest, gradient boosting, and the like. Examples of gradient boosting methods include Extreme Gradient Boosting (XGBoost) and Light Gradient Boosting Machine (LightGBM).

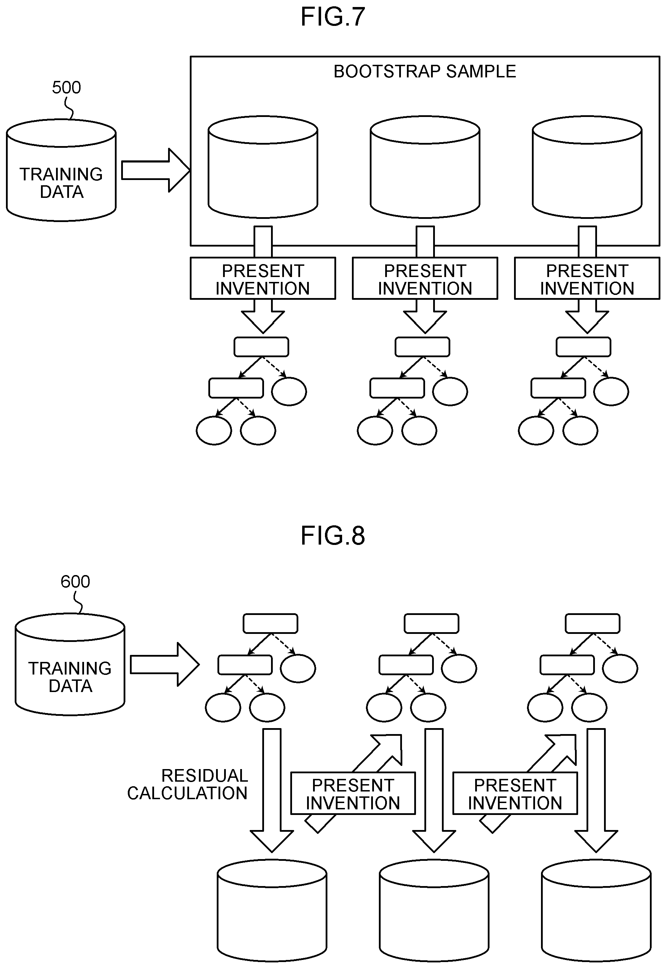

FIG. 7 is a diagram for explaining application of the present invention to a random forest.

As illustrated in FIG. 7, the training techniques of the decision tree model of the present example can be applied in parallel to each of the plurality of bootstrap samples of training data 500.

FIG. 8 is a diagram for explaining application of the present invention to gradient boosting. As illustrated in FIG. 7, the training technique of the decision tree model of the present embodiment is applied to training data 600, and a plurality of decision tree models can be sequentially trained so that a new training index in the training technique of the present embodiment is improved.

The plurality of trained decision tree models may be integrated into an ensemble model of the decision tree. The trained machine learning model 144 is stored in the storage unit 140.

The description returns to FIG. 1. The inference unit 154 inputs target data (explanatory variable) to be inferred to the trained machine learning model, thereby inferring whether or not a desired result can be obtained (objective variable) and an improvement proposal for obtaining a desired result in a case where it is impossible to obtain the desired result. The output unit 130 outputs the inferred improvement proposal.

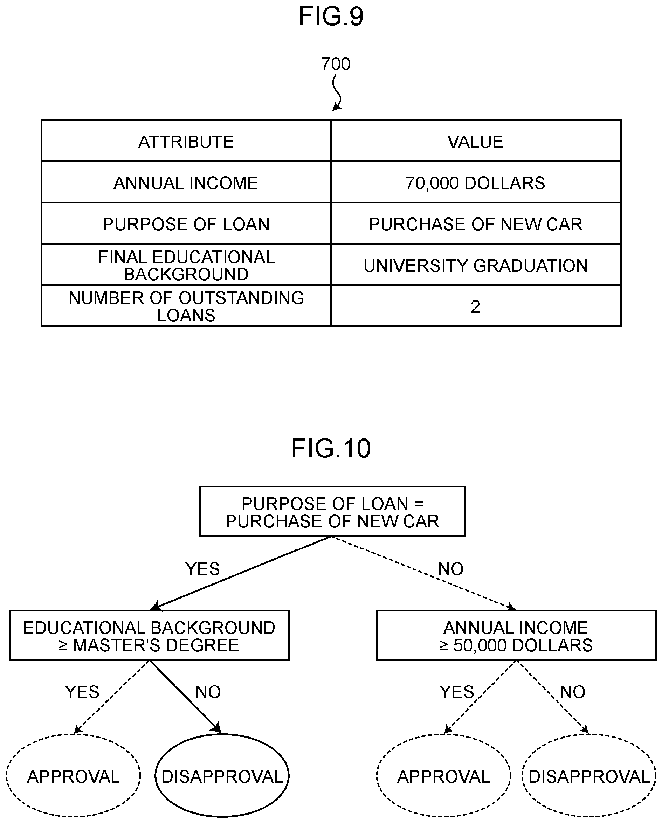

FIG. 9 is a diagram illustrating an example of target data. As illustrated in FIG. 9, in the target data 700, an attribute and a value of the attribute are associated with each other. In the example of FIG. 9, "annual income: 70,000 dollars, purpose of loan: purchase of new car, final educational background: university graduation, and number of outstanding loans: 2" are set for the attribute and the value of the attribute as the explanatory variable.

In the present embodiment, the inference unit 154 inputs the target data to be inferred to the trained machine learning model, and presents an improvement proposal in consideration of the possibility of realization in a case where it is impossible to obtain a desired result. For example, in a case where an undesired result that the credit risk is high is obtained with respect to the input of the target data 700 of FIG. 9 to the machine learning model, an improvement proposal considering the possibility of realization of reducing the number of outstanding loans is presented.

Here, effects obtained by the above-described information processing will be described.

In the present embodiment, the information processing apparatus 1 trains the machine learning model based on the training data and the constraint condition data. For example, in the present embodiment, the information processing apparatus 1 calculates the evaluation index based on the first information regarding the prediction accuracy of the machine learning model and the second information regarding the feasibility of the proposal, and trains the machine learning model based on the calculated evaluation index. As a result, the information processing apparatus 1 can generate a machine learning model capable of presenting an improvement proposal in consideration of a possibility of realization while suppressing a decrease in prediction accuracy of the machine learning model.

In the present embodiment, the information processing apparatus 1 performs processing of dividing a distribution of a plurality of pieces of training data into a plurality of regions in a plurality of first division patterns, and calculates an evaluation index for each of the plurality of first division patterns. The information processing apparatus 1 divides the distribution of the training data by the first division pattern having the highest evaluation index, generates the distribution of the divided training data, and trains the decision tree model.

In the present embodiment, the information processing apparatus 1 can be applied to training of an in-differentiable model such as the ensemble model of the decision tree. The prediction task in which the existence guarantee of the improvement proposal is important, such as the loan examination, is generally in the form of table data, but the present embodiment can be applied even in such a case.

In the present embodiment, the information processing apparatus 1 calculates the first information based on the number of pieces of training data matched with the label of each of the plurality of regions. As a result, the information processing apparatus 1 can consider the prediction accuracy of the machine learning model.

In the present embodiment, the information processing apparatus 1 calculates the second information based on the number of pieces of training data that can be proposed to change from the first region to the second region. As a result, the information processing apparatus 1 can consider the feasibility of the improvement proposal.

In the present embodiment, the information processing apparatus 1 recursively trains the machine learning model. As a result, the information processing apparatus 1 can improve the prediction accuracy of the machine learning model and the accuracy of the feasibility of the improvement proposal.

In the present embodiment, the training of the machine learning model in consideration of the prediction accuracy and the feasibility of the improvement proposal in the loan examination has been described. However, the present invention is not limited to the loan examination, and can be applied to training of an arbitrary machine learning model.

For example, the present embodiment may be applied to training of a machine learning model that proposes a field to study in order to pass a certain exam regarding education. Furthermore, the present embodiment may be applied to training of a machine learning model that proposes a skill to be acquired in order to be adopted by a certain company or department regarding human resources. As described above, the present invention can be applied to training of machine learning models used in various fields and sites.

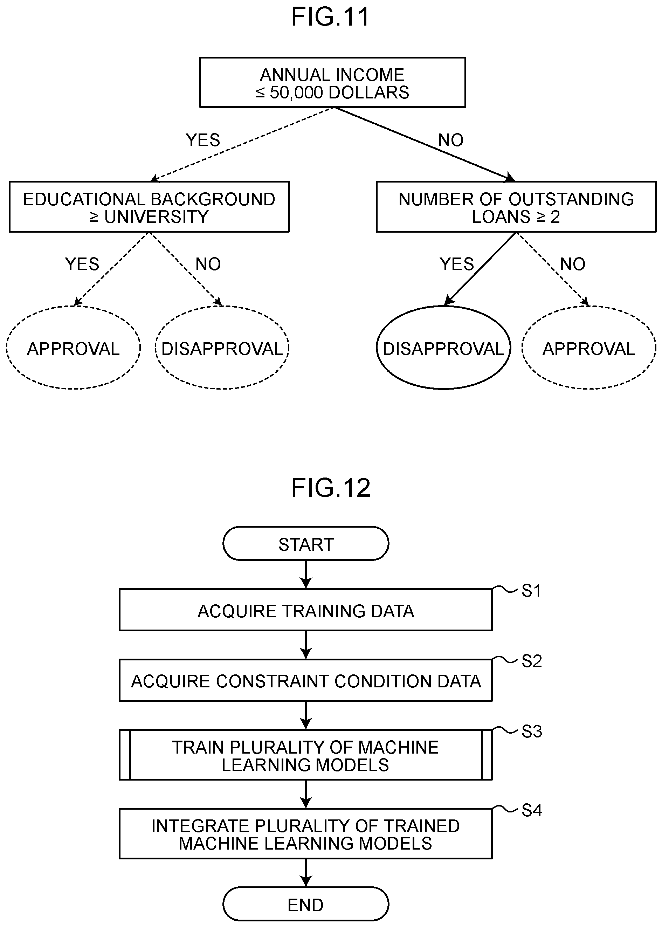

In addition, effects obtained by the present embodiment will be described in detail with reference to FIGS. 10 and 11.

First, problems of the related art will be described. FIG. 10 is a diagram for explaining a problem when the target data 700 of FIG. 9 is input to the machine learning model of the related art. As indicated by the solid arrow in FIG. 10, the inference result indicates that the loan is disapproved in the order that the purpose of the loan is purchase of a new car and the educational background is not equal to or higher than a master's degree.

Here, an improvement proposal for obtaining approval of a loan that is a desired result is considered. As can be seen from FIG. 10, in order for a loan to be approved, there is a need to change the educational background or the purpose of the loan, and there is a problem that there are only those with low feasibility of the improvement proposal.

Next, effects of the present embodiment will be described. FIG. 11 is a diagram for explaining an effect when the target data 700 of FIG. 9 is input to the machine learning model of the present embodiment. As indicated by the solid arrow in FIG. 11, the inference result indicates that loans are disapproved according to the order in which the annual income is not 50,000 dollars or less and the number of outstanding loans is 2 or more.

Here, an improvement proposal for obtaining approval of a loan that is a desired result is considered. As can be seen from FIG. 11, there is high feasibility of an improvement proposal that changes the number of outstanding loans in order for the loan to be approved. In this way, the information processing apparatus 1 of the present embodiment can generate the machine learning model capable of presenting the improvement proposal in consideration of the possibility of realization while suppressing the decrease in the prediction accuracy of the machine learning model.

FIG. 12 is a flowchart illustrating a flow of processing by the information processing apparatus 1 of the present embodiment. As illustrated in FIG. 12, the acquisition unit 151 acquires the training data (Step S1). Subsequently, the acquisition unit 151 acquires the constraint condition data (Step S2). Then, the calculation unit 152 calculates the evaluation index, and the training unit 153 selects the division line with a high evaluation index and trains a plurality of machine learning models (decision tree models) (Step S3). Finally, the training unit 153 integrates the plurality of trained machine learning models (Step S4). Note that although FIG. 12 illustrates that a plurality of machine learning models are trained and the plurality of trained machine learning models are integrated, the present invention is not limited thereto. For example, a single machine learning model may be trained to terminate processing.

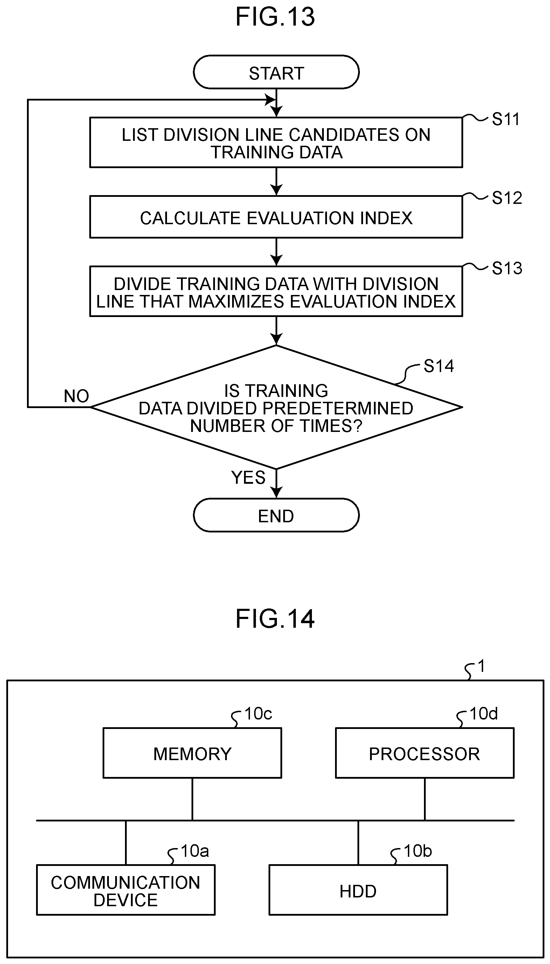

FIG. 13 is a flowchart illustrating details of a process of training the machine learning model. As illustrated in FIG. 13, the calculation unit 152 lists division line candidates on the training data (Step S11). Subsequently, the calculation unit 152 calculates the evaluation index (Step S12). Then, the training unit 153 divides the training data with the division line that maximizes the evaluation index (Step S13). Next, in a case where the processing of dividing the training data is divided a predetermined number of times (Yes in Step S14), the training unit 153 ends the processing. When the processing of dividing the training data is not divided a predetermined number of times (No in Step S14), the training unit 153 executes the processing in Step S11 on the divided training data.

FIG. 14 is an example of a hardware configuration of the information processing apparatus 1 of the present embodiment. As illustrated in FIG. 14, the information processing apparatus 1 includes a communication device 10a, a hard disk drive (HDD) 10b, a memory 10c, and a processor 10d.

The units illustrated in FIG. 14 are connected to each other by a bus or the like.

The communication device 10a is a network interface card or the like, and communicates with other devices. The HDD10b stores programs and DBs for operating the functions illustrated in FIG. 1.

The processor 10d reads a program for executing processing similar to the processing units illustrated in FIG. 1 from the HDD10b or the like and develops the program in the memory 10c, thereby operating the processes for executing the functions described with reference to FIG. 1 and the like. For example, this process executes a function similar to each processing unit included in the information processing apparatus 1. Specifically, a program having functions similar to those of the acquisition unit 151, the calculation unit 152, the training unit 153, and the inference unit 154 is read from the HDD10b or the like. Then, the processor 10d executes a process of executing processes similar to those of the acquisition unit 151, the calculation unit 152, the training unit 153, and the inference unit 154.

As described above, the information processing apparatus 1 operates as an information processing apparatus that executes training of a machine learning model by reading and executing a program. Furthermore, the information processing apparatus 1 can also implement functions similar to those of the above-described embodiment by reading the program from a recording medium by a medium reading device and executing the read program. Note that the program referred to in this other embodiment is not limited to being executed by the information processing apparatus 1. For example, the present invention can be similarly applied to a case where another computer or server executes a program or a case where these execute a program in cooperation.

This program can be distributed via a network such as the Internet. Further, this program may be executed by a computer such as a hard disk, a flexible disk (FD), a CD-ROM, a magneto-optical disk (MO), or a digital versatile disc (DVD).

The processing can be executed by being recorded on a recording medium readable by a pusher and being read from the recording medium by a computer.

Although the disclosed examples and their advantages have been described in detail, those skilled in the art will be able to make various changes, additions, and omissions without departing from the scope of the invention as clearly set forth in the claims.

## Claims

1. A training program of a machine learning model that outputs a proposal for obtaining a desired result, the training program of a machine learning model causing a computer to execute a process comprising:
acquiring(S1) training data including a plurality of attributes;
acquiring(S2) constraint condition data of the attributes;
calculating(S3) first information regarding prediction accuracy of the machine learning model based on the training data;
calculating(S3) second information regarding feasibility of the proposal based on the training data and the constraint condition data;
calculating(S3) an evaluation index based on the first information and the second information; and
training(S3) the machine learning model based on the evaluation index.

2. The training program of a machine learning model according to claim 1, wherein
the machine learning model is a decision tree model, and
the training(S3) of the machine learning model includes:
performing(S11) dividing a distribution of a plurality of pieces of the training data into a plurality of regions including a first region and a second region in a plurality of first division patterns;
calculating(S12) the evaluation index for each of the plurality of first division patterns; and
generating(S13) a distribution of divided training data by dividing the distribution of the training data by a first division pattern having a highest evaluation index.

3. The training program of a machine learning model according to claim 2, wherein
the calculating(S3) of the first information includes calculating the first information based on the number of pieces of training data matched with labels of the first region and the second region.

4. The training program of a machine learning model according to claim 2, wherein
the calculating(S3) of the second information includes calculating the second information is calculated based on the number of pieces of training data that enables proposing a change from the first region to the second region.

5. The training program of a machine learning model according to claim 2, wherein
the training(S3) of the machine learning model includes:
performing(S11) dividing a distribution of the plurality of divided training data into a plurality of regions including a third region and a fourth region in a plurality of second division patterns;
calculating(S12) the evaluation index for each of the plurality of second division patterns; and
generating(S13) a distribution of further divided training data by dividing the distribution of the divided training data by a second division pattern having the highest evaluation index.

6. The training program of a machine learning model according to any one of claims 2 to 5, wherein
the machine learning model is an ensemble learning model.

7. A training method of a machine learning model that outputs a proposal for obtaining a desired result, the training method of a machine learning model carried out by a computer, comprising:
acquiring(S1) training data including a plurality of attributes;
acquiring(S2) constraint condition data of the attributes;
calculating(S3) first information regarding prediction accuracy of the machine learning model based on the training data;
calculating(S3) second information regarding feasibility of the proposal based on the training data and the constraint condition data;
calculating(S3) an evaluation index based on the first information and the second information; and
training(S3) the machine learning model based on the evaluation index.

8. The training method of a machine learning model according to claim 7, wherein
the machine learning model is a decision tree model, and
the training of the machine learning model includes:
performing(S11) dividing a distribution of a plurality of pieces of the training data into a plurality of regions including a first region and a second region in a plurality of first division patterns;
calculating(S12) the evaluation index for each of the plurality of first division patterns; and
generating(S13) a distribution of divided training data by dividing the distribution of the training data by a first division pattern having a highest evaluation index.

9. The training method of a machine learning model according to claim 8, wherein
the calculating of the first information includes calculating the first information based on the number of pieces of training data matched with labels of the first region and the second region.

10. The training method of a machine learning model according to claim 8, wherein
the calculating of the second information includes calculating the second information based on the number of pieces of training data that enables proposing a change from the first region to the second region.

11. The training method of a machine learning model according to claim 8, wherein
the training of the machine learning model includes:
performing dividing a distribution of the plurality of divided training data into a plurality of regions including a third region and a fourth region in a plurality of second division patterns;
calculating the evaluation index for each of the plurality of second division patterns; and
generating a distribution of further divided training data by dividing the distribution of the divided training data by a second division pattern having the highest evaluation index.

12. The training method of a machine learning model according to any one of claims 8 to 11, wherein
the machine learning model is an ensemble learning model.

13. A training apparatus(1) of a machine learning model that outputs a proposal for obtaining a desired result, the training apparatus(1) of a machine learning model comprising:
an acquisition unit(151) configured to acquire training data including a plurality of attributes and constraint condition data of the attributes; and
a training unit(153) configured to calculate first information regarding prediction accuracy of the machine learning model based on the training data, calculate second information regarding feasibility of the proposal based on the training data and the constraint condition data, calculate an evaluation index based on the first information and the second information, and train the machine learning model based on the evaluation index.

14. The training apparatus(1) of a machine learning model according to claim 13, wherein
the machine learning model is a decision tree model, and
the training unit(153) performs dividing a distribution of a plurality of pieces of the training data into a plurality of regions including a first region and a second region in a plurality of first division patterns, calculates the evaluation index for each of the plurality of first division patterns, and generates a distribution of divided training data by dividing the distribution of the training data by a first division pattern having a highest evaluation index.

15. The training apparatus(1) of a machine learning model according to claim 14, wherein
the training unit(153) calculates the first information based on the number of pieces of training data matched with labels of the first region and the second region.

16. The training apparatus(1) of a machine learning model according to claim 14, wherein
the training unit(153) calculates the second information based on the number of pieces of training data that enables proposing a change from the first region to the second region.

17. The training apparatus(1) of a machine learning model according to claim 14, wherein
the training unit(153) performs dividing a distribution of the plurality of divided training data into a plurality of regions including a third region and a fourth region in a plurality of second division patterns, calculates the evaluation index for each of the plurality of second division patterns, and generates a distribution of further divided training data by dividing the distribution of the divided training data by a second division pattern having the highest evaluation index.

18. The training apparatus(1) of a machine learning model according to any one of claims 14 to 17, wherein
the machine learning model is an ensemble learning model.
